# EUROPEAN PATENT APPLICATION

(11) **EP 4 687 069 A1**
(43) Date of publication of application: **04.02.2026**
(21) Application number: 25191116.0
(22) Date of filing: 22.07.2025
(51) Int. Cl.: G06N 3/02, G06N 3/045, G06N 3/0475, H04L 12/18, G06Q 10/10

(54) **PERFORMING PREDETERMINED ACTIONS DURING A VIRTUAL MEETING BASED ON CONTEXT**

(30) Priority: 29.07.2024 US 202418786932
(71) Applicant: GOOGLE LLC, Mountain View CA 94043 (US)
(72) Inventor: BLUM, Niklas, Mountain View, CA 94043 (US); MEJIA ABREU, Felix David, Mountain View, CA 94043 (US); FEDYK, Ryan, Mountain View, CA 94043 (US); KARLSSON, Maria Josefin, Mountain View, CA 94043 (US); HULAUD, Stéphane Hervé Loïc, Mountain View, CA 94043 (US); VOLKOV, Anton, Mountain View, CA 94043 (US); POSTMA, Carolien, Mountain View, CA 94043 (US); ALY HASSAN, Ahmed Hassan, Mountain View, CA 94043 (US)
(74) Representative: Crook, Hugh Alexander

(57) **Abstract**

A method includes causing a virtual meeting UI to be presented during a virtual meeting between one or more participants. The virtual meeting UI may include one or more first regions each corresponding to a participant of the one or more participants. The virtual meeting UI may include a second region corresponding to a presentation of content by a first participant. The method includes determining, using an AI model and using at least a first portion of a transcript of the virtual meeting as input to the AI model, that a second participant is interested in accessing the content outside of the virtual meeting UI. The method includes causing the content to be accessible to the second participant outside of the virtual meeting UI.

## Description

### TECHNICAL FIELD

Aspects and implementations of the present disclosure relate to virtual meetings and more specifically relate to performing predetermined actions during a virtual meeting based on context.

### BACKGROUND

Virtual meetings can take place between multiple participants via a virtual meeting platform. A virtual meeting platform can include tools that allow multiple client devices to be connected over a network and share each other's audio (e.g., voice of a user recorded via a microphone of a client device) and/or video stream (e.g., a video captured by a camera of a client device, or video captured from a screen image of the client device) for efficient communication. To this end, the virtual meeting platform can provide a user interface that includes multiple regions to present the video stream of each participating client device.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

An aspect of the disclosure includes a method. The method includes causing a virtual meeting user interface (UI) to be presented during a virtual meeting between one or more participants. The virtual meeting UI may include one or more first regions each corresponding to a participant of the one or more participants. The virtual meeting UI may include a second region corresponding to a presentation of content by a first participant. The method includes determining, using an artificial intelligence (AI) model and using at least a first portion of a transcript of the virtual meeting as input to the AI model, that a second participant is interested in accessing the content outside of the virtual meeting UI. The method includes causing the content to be accessible to the second participant outside of the virtual meeting UI.

Another aspect of the disclosure includes a system. The system includes a memory and a processing device. The processing can be coupled to the memory and configured to perform one or more operations. The operations include causing a virtual meeting UI to be presented during a virtual meeting between one or more participants. The virtual meeting UI may include one or more first regions each corresponding to a participant of the one or more participants. The virtual meeting UI may include a second region corresponding to a presentation of content by a first participant. The operations include determining, using an AI model and using at least a first portion of a transcript of the virtual meeting as input to the AI model, that a second participant is interested in accessing the content outside of the virtual meeting UI. The operations include causing the content to be accessible to the second participant outside of the virtual meeting UI.

Another aspect of the disclosure includes a non-transitory computer-readable storage medium. The computer-readable medium includes instructions that cause a processing device to perform one or more operations. The operations include causing a virtual meeting UI to be presented during a virtual meeting between one or more participants. The virtual meeting UI may include one or more first regions each corresponding to a participant of the one or more participants. The virtual meeting UI may include a second region corresponding to a presentation of content by a first participant. The operations include determining, using an AI model and using at least a first portion of a transcript of the virtual meeting as input to the AI model, that a second participant is interested in accessing the content outside of the virtual meeting UI. The operations include causing the content to be accessible to the second participant outside of the virtual meeting UI.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example schematic block diagram of a system architecture for performing predetermined actions during a virtual meeting based on context, in accordance with some implementations of the present disclosure.
**FIG. 2** illustrates an example schematic block diagram of an example artificial intelligence (AI) training subsystem of a virtual meeting platform, in accordance with some implementations of the present disclosure.
**FIG. 3** illustrates an example schematic block diagram of an example AI inference subsystem of a virtual meeting platform, in accordance with some implementations of the present disclosure.
**FIG. 4** illustrates an example a flow diagram of a method for performing predetermined actions during a virtual meeting based on context, in accordance with some implementations of the present disclosure.
**FIG. 5** illustrates an example user interface (UI) of a virtual meeting, in accordance with some implementations of the present disclosure.
**FIG. 6** illustrates an example UI of a virtual meeting, in accordance with some implementations of the present disclosure.
**FIG. 7** is a block diagram illustrating an example computer system, in accordance with some implementations of the present disclosure.

### DETAILED DESCRIPTION

Aspects of the present disclosure relate to performing predetermined actions during a virtual meeting based on context. A virtual meeting platform can enable video-based conferences between multiple participants via respective client devices that are connected over a network and share each other's audio (e.g., voice of a user recorded via a microphone of a client device) and/or video streams (e.g., a video captured by a camera of a client device) during a virtual meeting. In some instances, a virtual meeting platform can enable a significant number of client devices (e.g., up to one hundred or more client devices) to be connected via the virtual meeting. A participant of a virtual meeting can speak to the other participants of the virtual meeting. Some existing virtual meeting platforms can provide a user interface (UI) to each client device connected to the virtual meeting, where the UI displays visual items corresponding to the video streams shared over the network in a set of regions in the UI.

A typical virtual meeting platform allows a participant to request a certain action to be performed. Such actions may include sharing content, scheduling another virtual meeting, or sending an email. The same participant, or another participant of the virtual meeting, should then perform the action, which often requires multiple steps and can include leaving the virtual meeting UI to perform the action. This presents several disadvantages. If the participant carrying out the action performs the action during the virtual meeting, the participant stops participating in the virtual meeting, which causes the participant to miss important discussion and other occurrences during the virtual meeting or causes the other participants to stop and wait for the participant to finish carrying out the action. If the participant waits to carry out the action until after the meeting, the participant risks forgetting to carry out the action or carrying out the action incorrectly.

Implementations of the present disclosure address the above and other deficiencies by providing systems and methods that facilitate performing predetermined actions during a virtual meeting based on context. During a virtual meeting, in response to input of a first participant, a region of the virtual meeting UI displays content (e.g., a slide presentation, an image, a video, or a text-based document). A second participant can express interest in accessing the content outside of the virtual meeting UI (e.g., by requesting the first participant to send a copy of the content to the second participant). The participant can express interest using audio (e.g., by speaking into a microphone that provides audio data to the virtual meeting) or using text-based interaction (e.g., using a text-based chat feature of the virtual meeting). The second participant's expression of interest in accessing the content can form part of a transcript of the virtual meeting. A portion of the transcript of the virtual meeting can be provided as input to an artificial intelligence (AI) model, which can provide output indicating whether the second participant has expressed the interest. The virtual meeting system can cause the content to be accessible to the second participant outside of the virtual meeting UI. The AI model can be used to determine that the second participant or another participant has expressed interest in having some other type of action performed during the virtual meeting (e.g., sending an email or scheduling a follow-up virtual meeting).

Aspects of the present disclosure provide technical advantages over previous solutions. Aspects of the present disclosure provide a system that uses AI models to determine that a virtual meeting participant is interested in accessing content or is interested in other predetermined actions during a virtual meeting. The system can then automatically perform such actions. Such automated performance allows participants to continue participating the virtual meeting while the system automatically fulfills of the requested action, which increases the efficiency of the virtual meeting and improves the virtual meeting experience for the participants. Additionally, aspects of the present disclosure reduce the use of computing resources consumed by participants' actions (e.g., by reducing computing device usage consumed by a participant's action that would have occurred in response to the user carrying out the requested action).

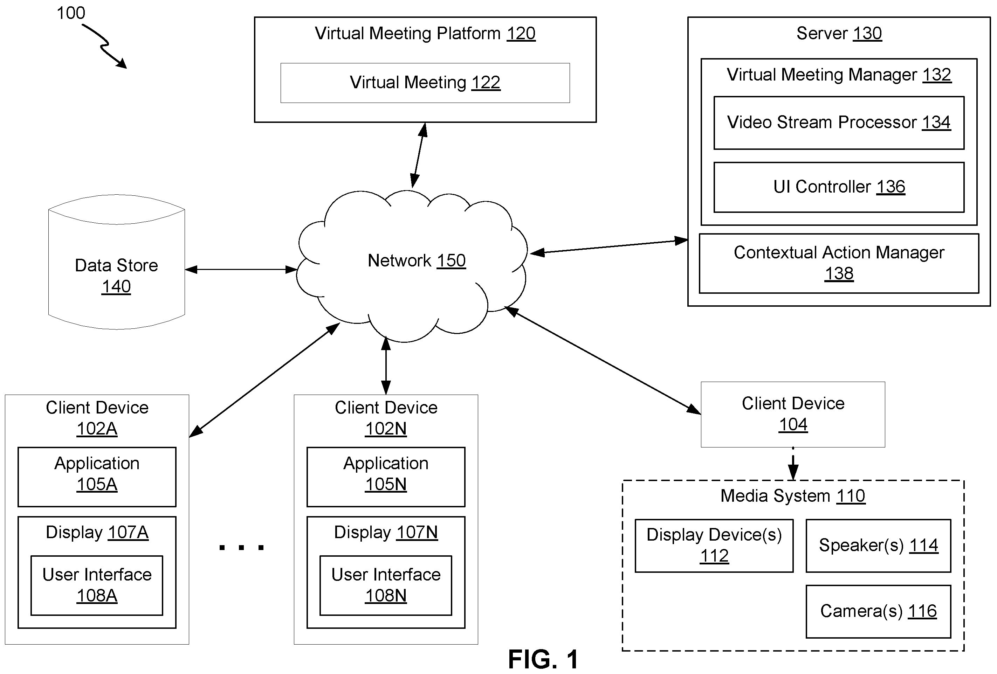

**FIG. 1** illustrates an example system architecture 100, in accordance with implementations of the present disclosure. The system architecture 100 includes one or more client devices 102A-N or 104, a virtual meeting platform 120, a server 130, and a data store 140, each connected to a network 150.

In some implementations, the virtual meeting platform 120 enables users of one or more of the client devices 102A-N, 104 to connect with each other in a virtual meeting (e.g., a virtual meeting 122). A virtual meeting 122 refers to a real-time communication session such as a video-based call or video chat, in which participants can connect with multiple additional participants in real-time and be provided with audio and video capabilities. A virtual meeting 122 may include an audio-based call or chat, in which participants connect with multiple additional participants in real-time and are provided with audio capabilities. Real-time communication refers to the ability for users to communicate (e.g., exchange information) instantly without transmission delays and/or with negligible (e.g., milliseconds or microseconds) latency. The virtual meeting platform 120 can allow a user of the virtual meeting platform 120 to join and participate in a virtual meeting 122 with other users of the virtual meeting platform 120 (such users sometimes being referred to, herein, as "virtual meeting participants" or, simply, "participants"). Implementations of the present disclosure can be implemented with any number of participants connecting via the virtual meeting 122 (e.g., up to one hundred or more).

In implementations of the disclosure, a "user" or "participant" can be represented as a single individual. However, other implementations of the disclosure encompass a "user" being an entity controlled by a set of users or an organization and/or an automated source such as a system or a platform. In situations in which the systems discussed here collect personal information about users, or can make use of personal information, the users can be provided with an opportunity to control whether the virtual meeting platform 120 or the virtual meeting manager 132 collects user information (e.g., information about a user's social network, social actions or activities, profession, a user's preferences, or a user's current location), or to control whether or how to receive content from the virtual meeting platform 120 or the virtual meeting manager 132 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120 or the virtual meeting manager 132.

In some implementations, the server 130 includes a virtual meeting manager 132. The virtual meeting manager 132, in one or more implementations, is configured to manage a virtual meeting 122 between multiple users of the virtual meeting platform 120. The virtual meeting manager 132 can provide the UIs 108A-N to each client device 102A-N, 104 to enable users to watch and listen to each other during a virtual meeting 122. The virtual meeting manager 132 can also collect and provide data associated with the virtual meeting 122 to each participant of the virtual meeting 122. In some implementations, the virtual meeting manager 132 provides the UIs 108A-N for presentation by client applications 105A-N. For example, the respective UIs 108A-N can be displayed on the display devices 107A-107N by the client applications 105A-N executing on the operating systems of the client devices 102A-N, 104. In some implementations, the virtual meeting manager 132 determines visual items for presentation in the UIs 108A-N during a virtual meeting. A visual item can refer to a UI element that occupies a particular region in the UI and is dedicated to presenting a video stream from a respective client device. Such a video stream can depict, for example, a user of the respective client device 102A-N, 104 while the user is participating in the virtual meeting 122 (e.g., speaking, presenting, listening to other participants, watching other participants, etc., at particular moments during the virtual meeting 122), a physical conference or meeting room (e.g., with one or more participants present), a document or media content (e.g., video content, one or more images, etc.) being presented during the virtual meeting 122, etc.

In some implementations, the virtual meeting manager 132 includes a video stream processor 134 and a UI controller 136. Each of the video stream processor 134 or the UI controller 136 may include a software application (or a subset thereof) that performs certain virtual meeting functionality for the virtual meeting manager 132. The video stream processor 134 can be configured to receive video streams from one or more of the client devices 102AN, 104. The video stream processor 134 can be configured to determine visual items for presentation in the UI of such client devices 102A-N, 104 (e.g., the UIs 108-108N, discussed below) during the virtual meeting 122. Each visual item can correspond to a video stream from a client device 102A-N, 104 (e.g., the video stream pertaining to one or more participants of the virtual meeting 122). In some implementations, the video stream processor 134 receives audio streams associated with the video streams from the client devices (e.g., from an audiovisual component of the client devices 102A-N, 104). Once the video stream processor 134 has determined visual items for presentation in the UI, the video stream processor 134 can notify the UI controller 136 of the determined visual items. The visual items for presentation can be determined based on current speaker, current presenter, order of the participants joining the virtual meeting 122, list of participants (e.g., alphabetical), etc.

In some implementations, the UI controller 136 provides the UI for the virtual meeting 122 (e.g., the UI 108A-N). The UI can include multiple regions. Each region can display a video stream pertaining to one or more participants of the virtual meeting 122. The UI controller 136 can control which video stream is to be displayed by providing a command to one or more client devices 102A-N, 104 that indicates which video stream is to be displayed in which region of the UI (along with the received video and audio streams being provided to the client devices 102A-N, 104). For example, in response to being notified of the determined visual items for presentation in the UI 108A-N, the UI controller 136 can transmit a command causing each determined visual item to be displayed in a region of the UI and/or rearranged in the UI.

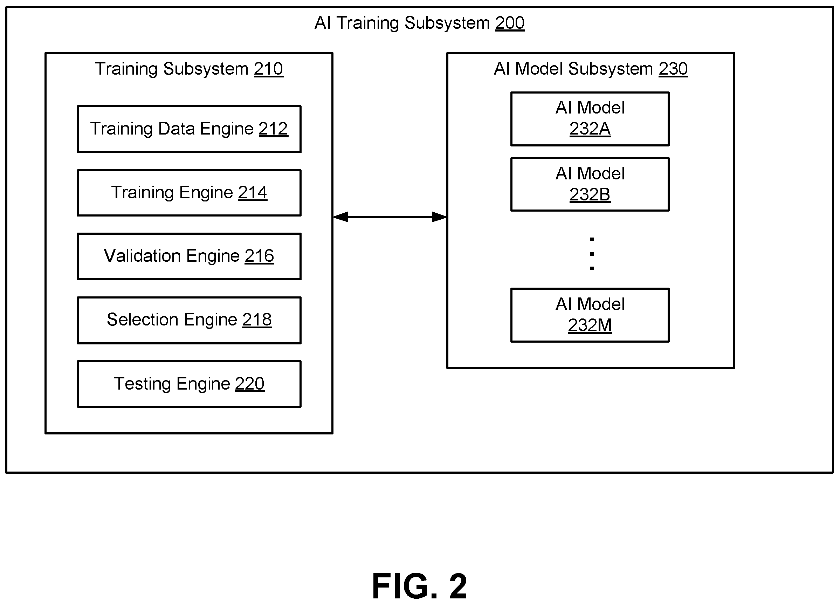

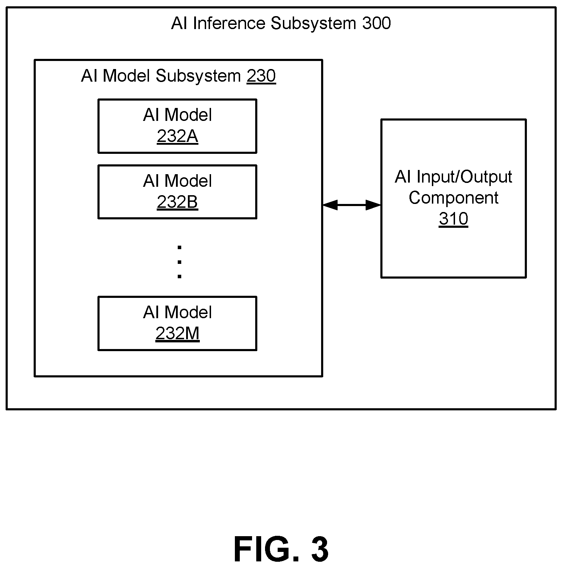

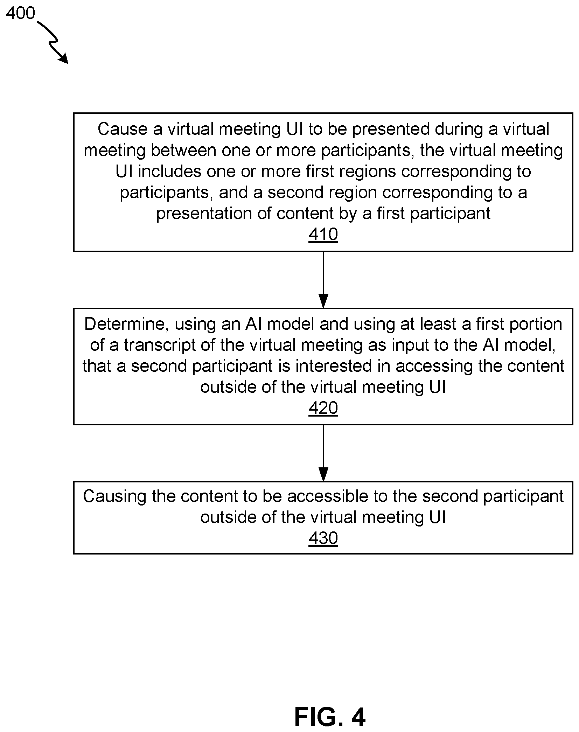

In one or more implementations, the virtual meeting manager 132 includes a contextual action manager 138. The contextual action manager 138 may include a software application (or a subset thereof) that performs certain virtual meeting functionality for the virtual meeting manager 132. The contextual action manager 138 can be configured to determine that a participant of the virtual meeting is interested in accessing content presented during the virtual meeting 122 outside of the virtual meeting 122. The contextual action manager 138 can determine that a participant is interested in having some other predetermined action performed (e.g., scheduling a follow-up virtual meeting or sending an email). The contextual action manager 138 may include an AI inference subsystem. The AI inference subsystem may include one or more AI models configured to determine whether a participant of the virtual meeting 122 is interested in performance of a predetermined action, determine contextual information of the virtual meeting 122 that can be useful in performing the predetermined action, and/or other functionality that can assist the contextual action manager 138. The contextual action manager 138 can provide a request to an application to cause the application to perform the predetermined action. The request may include an application programming interface (API) call to the application. The application can execute on the server 130 or on a computing device external from the architecture 100. Further information regarding the AI inference subsystem is discussed below in relation to **FIG. 2** and **FIG. 3****.** Functionality of the contextual action manager 138 is discussed further below in relation to **FIG. 4****.**

In some implementations, each of the virtual meeting platform 120 or the server 130 include one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. The virtual meeting platform 120 can also include a website (e.g., one or more webpages) or application back-end software that can be used to enable a user to connect with other users by way of the virtual meeting 122.

In some implementations, the one or more client devices 102A-N each include one or more computing devices such as personal computers (PCs), laptops, mobile phones, smart phones, tablet computers, netbook computers, network-connected televisions, etc. The one or more client devices 102A-N can also be referred to as "user devices." Each client device 102AN can include an audiovisual component that can generate audio and video data to be streamed to the virtual meeting manager 132. The audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user associated with a particular client device 102A-N. In some implementations, the audiovisual component includes an image capture device (e.g., a camera) to capture images and generate video data (e.g., a video stream) of the captured data of the captured images.

In some implementations, the system architecture 100 includes a client device 104. The client device 104 can differ from a client device of the one or more client devices 102A-N because the client device 104 can be associated with a physical conference or meeting room. Such client device 104 can include or be coupled to a media system 110 that can include one or more display devices 112, one or more speakers 114 and one or more cameras 116. The display device 112 can be, for example, a smart display or a non-smart display (e.g., a display that is not itself configured to connect to the network 150). Users that are physically present in the room can use the media system 110 rather than their own devices (e.g., one or more of the client devices 102A-N) to participate in the virtual meeting 122, which can include other remote users. For example, the users in the room that participate in the virtual meeting 122 can control the display device 112 to show a slide presentation or watch slide presentations of other participants. Sound and/or camera control can similarly be performed. Similar to client devices 102A-N, the one or more client devices 104 can generate audio and video data to be streamed to the virtual meeting manager 132 (e.g., using one or more microphones, speakers 114 and cameras 116).

As described previously, an audiovisual component of each client device 102A-N, 104 can capture images and generate video data (e.g., a video stream) of the captured data of the captured images. In some implementations, the client devices 102A-N, 104 transmit the generated video stream to virtual meeting manager 132. The audiovisual component of each client device 102A-N, 104 can also capture an audio signal representing speech of a user and generate audio data (e.g., an audio file or audio stream) based on the captured audio signal. In some implementations, the client devices 102A-N, 104 transmit the generated audio data to the virtual meeting manager 132.

In some implementations, each client device 102A-N or 104 includes a respective client application 105A-N, which can be a mobile application, a desktop application, a web browser, etc. The client application 105A-N can present, on a display device 107-107N of a client device 102A-N or a UI (e.g., a UI of the UIs 108A-N), one or more features of the application 105A-N for users to access the virtual meeting platform 120. For example, a user of client device 102A can join and participate in the virtual meeting 122 via a UI 108A presented on the display device 107A by the application 105A. The user can present a document to participants of the virtual meeting 122 using the UI 108A. Each of the UIs 108A-N can include multiple regions to present visual items corresponding to video streams of the client devices 102A-N provided to the server 130 for the virtual meeting 122.

In one or more implementations, the contextual action manager 138 is part of a client device 102A-N, 104. For example, the application 105A-N can include the contextual action manager 138, which can determine whether a participant of the virtual meeting 122 is interested in accessing content outside of the virtual meeting 122 or is interested in having some other predetermined action performed, determine contextual information of the virtual meeting 122 that can be useful in providing access to the content or performing the predetermined action, and/or causing the content to be accessible or cause the predetermined action to be performed. In some implementations, the application 105A sends the video stream to the other client devices 102B-N, 104, and receives the video streams from the other client devices 102B-N, 104, and the applications 105A-105N can generate their respective virtual meeting UIs 108A-N or can finalize their respective UIs 108A-N, which may have been partially generated by the UI controller 136.

In some implementations, the data store 140 is a persistent storage that is capable of storing data as well as data structures to tag, organize, and index the data. A data item can include audio data and/or video stream data, in accordance with implementations described herein. The data store 140 can be hosted by one or more storage devices, such as main memory, magnetic or optical storage-based disks, tapes, hard drives, flash memory, and so forth. In some implementations, the data store 140 is a network-attached file server, while in other implementations, the data store 140 is some other type of persistent storage such as an object-oriented database, a relational database, and so forth, that can be hosted by the virtual meeting platform 120 or one or more different machines (e.g., the server 130) coupled to the virtual meeting platform 120 using the network 150. In some implementations, the data store 140 stores portions of audio and video streams received from one or more client devices 102A-N, 104 for the virtual meeting platform 120. Moreover, the data store 140 can store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, etc.). These documents can be shared with users of the client devices 102A-N, 104 and/or concurrently editable by the users.

In some implementations, the network 150 includes a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

It should be noted that in some implementations, the functions of the virtual meeting platform 120 or the server 130 are provided by a fewer number of machines. For example, in some implementations, the server 130 is integrated into a single machine, while in other implementations, the server 130 is integrated into multiple machines. In addition, in one or more implementations, the server 130 is integrated into the virtual meeting platform 120.

In general, one or more functions described in the several implementations as being performed by the virtual meeting platform 120 or server 130 can also be performed by the client devices 102A-N, 104 in other implementations, if appropriate. In addition, in some implementations, the functionality attributed to a particular component can be performed by different or multiple components operating together. The virtual meeting platform 120 or the server 130 can also be accessed as a service provided to other systems or devices through appropriate application programming interfaces, and thus is not limited to use in websites.

Although implementations of the disclosure are discussed in terms of the virtual meeting platform 120 and users of the virtual meeting platform 120 participating in a virtual meeting 122, implementations can also be generally applied to any type of telephone call, conference call, or other technological communications methods between users. Implementations of the disclosure are not limited to virtual meeting platforms that provide virtual meeting tools to users.

**FIG. 2** illustrates an example AI training subsystem 200, in accordance with implementations of the present disclosure. As illustrated in **FIG. 2****,** the AI training subsystem 200 can include a training subsystem 210, which may include a training data engine 212, a training engine 214, a validation engine 216, a selection engine 218, or a testing engine 220. The AI training subsystem 200 may include an AI model subsystem 230. The AI model subsystem 230 may include one or more AI models 232A-M.

In one implementation, the AI model 232A-M includes one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN may include adjusting the weights or other features of the ANN based on an output produced by the ANN during training.

An ANN may include, for example, a convolutional neural network (CNN), recurrent neural network (RNN), or a deep neural network. A CNN, a specific type of ANN, hosts multiple layers of convolutional filters. Pooling is performed, and non-linearities can be addressed, at lower layers, on top of which a multi-layer perceptron is commonly appended, mapping top layer features extracted by the convolutional layers to decisions (e.g., classification outputs). A deep network may include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) may include a hierarchy of layers, where the different layers learn different levels of representations that correspond to different levels of abstraction. In deep learning, each level learns to transform its input data into a slightly more abstract and composite representation.

In one implementation, an AI model 232A-M includes a generative AI model. A generative AI model can deviate from a machine learning model based on the generative AI model's ability to generate new, original data, rather than making predictions based on existing data patterns. A generative AI model can include a generative adversarial network (GAN), a variational autoencoder (VAE), or a large language model (LLM). In some instances, a generative AI model can employ a different approach to training or learning the underlying probability distribution of training data, compared to some machine learning models. For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

Generative AI models also have the ability to capture and learn complex, high-dimensional structures of data. One aim of generative AI models is to model underlying data distribution, allowing them to generate new data points that possess the same characteristics as training data. Some machine learning models (e.g., that are not generative AI models) focus on optimizing specific prediction of tasks.

In some implementations, an AI model 232A-M is an AI model that has been trained on a corpus of data. In some implementations, the AI model 232A-M can be a model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. Such a pre-training can be used by the AI model 232A-M to learn broad elements including, image or speech recognition, general sentence structure, common phrases, vocabulary, natural language structure, and other elements. In some implementations, this first, foundational model is trained using self-supervision, or unsupervised training on such datasets.

In some implementations, the AI model 232A-M is then further trained or fine-tuned on organizational data, including proprietary organizational data. The AI model 232AM can also be further trained or fine-tuned on organizational data associated with virtual meeting 122 transcripts or other data associated with a virtual meeting 122.

In some implementations, the second portion of training, including fine-tuning, can be unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 232A-M while training can be ranked by a user, according to a variety of factors, including accuracy, helpfulness, veracity, acceptability, or any other metric useful in the fine-tuning portion of training. In this manner, the AI model 232A-M can learn to favor these and any other factors relevant to users when generating a response. Further details regarding training are provided below.

In some implementations, an AI model 232A-M includes one or more pre-trained models, or fine-tuned models. In a non-limiting example, in some implementations, the goal of the "fine-tuning" is accomplished with a second, or third, or any number of additional models. For example, the outputs of the pre-trained model can be input into a second AI model that has been trained in a similar manner as the "fine-tuned" portion of training above. In such a way, two more AI models can accomplish work similar to one model that has been pre-trained, and then fine-tuned.

As indicated above, an AI model 232A-M may include one or more generative AI models, allowing for the generation of new and original content. The generative AI model can use other machine learning models including an encoder-decoder architecture including one or more self-attention mechanisms, and one or more feed-forward mechanisms. In some implementations, the generative AI model includes an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. A generative AI model can also utilize the previously discussed deep learning techniques, including RNNs, CNNs, or transformer networks. Further details regarding generative AI models are provided herein.

In some implementations, different AI models 232A-M of the one or more AI models 232A-M are different types of AI models. Multiple AI models 232A-M of the one or more AI models 232A-M can form an ensemble.

In one implementation, the AI training subsystem 200 manages the training and testing of the one or more AI models 232A-M. The training data engine 212 can generate training data (e.g., a set of training inputs and a set of target outputs) to train an AI model 232AM. In an illustrative example, the training data engine 212 can initialize a training set *T* to null. The training data engine 212 can add the training data to the training set T and can determine whether training set *T* is sufficient for training the AI model 232A-M. The training set *T* can be sufficient for training the AI model 232A-M if the training set *T* includes a threshold amount of training data, in some implementations. In response to determining that the training set *T* is not sufficient for training, the training data engine 212 can identify additional data. In response to determining that the training set T is sufficient for training, the training data engine 212 can provide the training set *T* to the training engine 214.

In some implementations, the training data includes one or more words, sentences, sentence fragments, or other portions of textual data. The words, sentences, sentence fragments, or other portions of text may have been included in a transcript of a virtual meeting, other data representing interactions between participants of a virtual meeting, or other types of data. In one or more implementations, the training data includes data indicating a context of a virtual meeting. The context of a virtual meeting may include whether a participant is presenting content during the virtual meeting (and if so, data associated with the content such as a file name of the content, an owner of the content, etc.), the participants present at the virtual meeting, users invited to the virtual meeting that are absent from the virtual meeting, or other data associated with the virtual meeting. A piece of training data may include, as a target output for an AI model 232A-M, data indicating whether the training data indicates that a participant is interested in accessing content outside of a virtual meeting or data indicating whether a participant is interested in having some other predetermined action associated with the virtual meeting 122 performed.

The training engine 214 can train the AI model 232A-M using the training data (e.g., training set T). The AI model 232A-M can refer to the model artifact that is created by the training engine 214 using the training data, where such training data can include training inputs and, in some implementations, corresponding target outputs (e.g., correct answers for respective training inputs). The training engine 214 can input the training data into the AI model 232A-M so that the AI model 232A-M can find patterns in the training data and configure itself based on those patterns.

Where the AI model 232A-M uses supervised learning, the training engine 214 can assist the AI model 232A-M in determining whether the AI model 232A-M maps the training input to the target output (the answer to be predicted). Where the AI model 232A-M uses unsupervised learning, the training engine 214 can input the training data into the AI model 232A-M. The AI model 232A-M can configure itself based on the input training data, but since the training data may not include a target output, the training engine 214 may not assist the AI model 232A-M in determining whether the AI model 232A-M provided a correct output during the training process. Other input to the training subsystem 210 (e.g., user feedback) can assist the AI model 232A-M in determining whether the AI model 232A-M provided a correct output.

The validation engine 216 can be capable of validating a trained AI model 232A-M using a corresponding set of features of a validation set from the training data engine 212. The validation engine 216 can determine an accuracy of each of the trained AI models 232A-M based on the corresponding sets of features of the validation set. Where the training data may not include a target output, validating a trained AI model 232A-M may include obtaining an output from the AI model 232A-M and providing the output to another entity for evaluation. The other entity may include another AI model configured to evaluation the output of the AI model that is undergoing training. The other entity may include a human. The validation engine 216 can discard a trained AI model 232A-M that has an accuracy that does not meet a threshold accuracy or that otherwise fails evaluation. In some implementations, the selection engine 218 is capable of selecting a trained AI model 232A-M that has an accuracy that meets a threshold accuracy. In some implementations, the selection engine 218 is capable of selecting the trained AI model that has the highest accuracy of multiple trained AI models 232A-M. In some implementations, the selection engine 218 obtains input from another AI model or a human and can select a trained AI model 232A-M based on the input.

The testing engine 220 can be capable of testing a trained AI model 232A-M using a corresponding set of features of a testing set from the training data engine 212. For example, a first trained AI model 232A-M that was trained using a first set of features of the training set can be tested using the first set of features of the testing set. The testing engine 220 can determine a trained AI model 232A-M that has the highest accuracy or other evaluation of all of the trained AI models 232A-M based on the testing sets.

As described above, the AI training subsystem 200 can be configured to train an LLM. It should be noted that the AI training subsystem 200 can train an LLM in accordance with implementations described herein or in accordance with other techniques for training LLMs. For example, an LLM can be trained on a large amount of data, including prediction of one or more missing words in a sentence, identification of whether two consecutive sentences are logically related to each other, generation of next texts based on prompts, etc.

In some implementations, the AI model subsystem 230 selects an AI model 232AM from the one or more AI models 232A-M. Selecting an AI model 232A-M may include selecting the AI model 232A-M for training or for use. For example, the training subsystem 210 can provide data to the AI model subsystem 230 indicating which AI model 232A-M is to be trained. The AI model subsystem 230 can obtain data from a component of the architecture 100 indicating which AI model 232A-M to use to generate output for the contextual action manager 138.

**FIG. 3** depicts one implementation of an AI inference subsystem 300. The AI inference subsystem 300 may include the AI model subsystem 230, which may include one or more AI models 232A-M. The AI inference subsystem 300 may include an AI input/output component 310. The AI input/output component 310 can be configured to feed data as input to an AI model 232A-M and obtain one or more outputs. In such implementations, the AI input/output component 310 feeds a portion of a virtual meeting 122 transcript as input to an AI model 232A-M and obtain one or more outputs.

In some implementations, the AI inference subsystem 300 is not part the contextual action manager 138 and can, instead, be part of another system or sub-system or be an independent system. In some implementations, the AI inference subsystem 300 includes the training system 210.

As indicated above, in some implementations, an AI model 232A-M includes an LLM. In some implementations, the LLM includes generative AI functionality. In such implementations, the AI model 232A-M generates new content based on provided input data. The generative AI model 232A-M can be supported by a prompt subsystem (not shown), which can reside on the architecture 100. The prompt subsystem can enable a user or a component of the architecture 100 to access the generative AI model 232A-M. The prompt subsystem can be configured to perform automated identification of, and facilitate retrieval of, relevant and timely contextual information for efficient and accurate processing of prompts by the AI model 232A-M. Using the data network 150 (or another network), the prompt subsystem can be in communication with one or more of the one or more client devices 102A-N, 104, the virtual meeting platform 120, or the server 130 (including the virtual meeting manager 132 and/or the contextual action manager 138). Communications between the prompt subsystem and the AI input/output component 310 can be facilitated by a generative model API, in some implementations. Communications between the prompt subsystem and the one or more client devices 102A-N, 104, the virtual meeting platform 120, or the server 130 can be facilitated by a data management API. In additional or alternative implementations, the generative model API translates prompts generated by the prompt subsystem into unstructured natural-language format and, conversely, translate responses received from the AI model 232A-M into any suitable form (e.g., including any structured proprietary format as can be used by the prompt subsystem). Similarly, the data management API can support instructions that can be used to communicate data requests to the one or more client devices 102A-N, 104, the virtual meeting platform 120, or the server 130 and formats of data received from such components.

As indicated above, a user can interact with the prompt subsystem via a prompt interface. The prompt interface may include a UI element that can support any suitable types of user inputs (e.g., textual inputs, speech inputs, image inputs, etc.). The UI element can further support any suitable types of outputs (e.g., textual outputs, speech outputs, image outputs, etc.). In some implementations, the UI element is a web-based UI element, a mobile application-supported UI element, or any combination thereof. The UI element includes selectable items, in some implementations, that enables a user to select from multiple generative AI models 232A-M. The UI element can allow the user to provide consent for the prompt subsystem or the generative AI model 232A-M to access user data or other data associated with a client device 102A-N, 104 and stored in the data store 140, process or store new data received from the user, and the like. The UI element can additionally or alternatively allow the user to withhold consent to provide access to user data. In some implementations, user input entered using the UI element is communicated to the prompt subsystem by a user API. The user API can be located at the client device 102A-N, 104 of the user accessing the query tool.

In some implementations, the prompt subsystem includes a prompt analyzer to support various operations of this disclosure. For example, the prompt analyzer can receive an input (e.g., a prompt submitted by a user of the client device 102A-N, 104) and generate one or more intermediate prompts to the generative AI model 232A-M to determine what type of data the generative AI model may need to successfully respond to the input. Upon receiving a response from the generative AI model 232A-M, the prompt analyzer can analyze the response, form a request for relevant contextual data for the data store 140, which can then supply such data. The prompt analyzer can then generate (e.g., automatically (without any user request)) a prompt to the generative AI model 232A-M that includes the original prompt and the contextual data. In some implementations, the prompt analyzer, itself, includes a lightweight generative AI model that can process the intermediate prompt(s) and determine what type of contextual data may be needed by the generative AI model 232A-M together with the original prompt to ensure a meaningful response from generative AI model 232A-M.

The prompt subsystem may include (or can have access to) instructions stored on one or more tangible, machine-readable storage media of a computing device (e.g., the virtual meeting platform 120 or the server 130) and executable by one or more processing devices of the computing device. In one implementation, the prompt subsystem is implemented on a single machine. In some implementations, the prompt subsystem is combination of a client component and a server component. In some implementations, the prompt subsystem is executed entirely on a client device 102A-N, 104. Alternatively, some portion of the prompt subsystem can be executed on a client computing device while another portion of the query tool can be executed on a server machine.

**FIG. 4** is a flowchart illustrating one embodiment of a method 400 for performing predetermined actions during a virtual meeting based on context, in accordance with some implementations of the present disclosure. A processing device, having one or more central processing units (CPU(s)), one or more graphics processing units (GPU(s)), and/or memory devices communicatively coupled to the one or more CPU(s) and/or GPU(s) can perform the method 400 and/or one or more of the method's 400 individual functions, routines, subroutines, or operations. In certain implementations, a single processing thread can perform the method 400. Alternatively, two or more processing threads can perform the method 400, each thread executing one or more individual functions, routines, subroutines, or operations of the method. In an illustrative example, the processing threads implementing the method 400 can be synchronized (e.g., using semaphores, critical sections, and/or other thread synchronization mechanisms). Alternatively, the processing threads implementing the method 400 can be executed asynchronously with respect to each other. Various operations of the method 400 can be performed in a different (e.g., reversed) order compared with the order shown in **FIG. 4****.** Some operations of the method 400 can be performed concurrently with other operations. Some operations can be optional. In some implementations, the contextual action manager 138 performs one or more of the operations of the method 400.

At block 410, processing logic causes a virtual meeting UI 108A-N to be presented during a virtual meeting 122 between one or more participants. The virtual meeting UI 108AN may include one or more first regions. Each first region can correspond to a participant of the one or more participants. The virtual meeting UI 108A-N may include a second region. The second region can correspond to a presentation of content by a first participant of the virtual meeting 122.

In some implementations, the content of the second region includes a slide presentation, an image, a video, or a text-based document. The slide presentation may include data that includes one or more slides, and each slide may include text, images, videos, or other data. An image may include data representing a visual picture. A video may include data representing multiple sequential images and may include audio data synchronized to the sequential images. A text-based document may include data representing word processing data, including text, pictures, formulas, or other data.

In one implementation, the content may include a collaborative document stored on a cloud storage platform. Multiple users of the cloud storage platform may be able to access the collaborative document, using their respective client devices 102A-N, 104, and modify the contents of the collaborative document in real time. Modifications to the collaborative document can be reflected in a collaborative document UI in real time (or near real time). The collaborative document may include a word processing document, a spreadsheet, a slide presentation, a form, an image, a video, or some other type of document.

In some implementations, the content can be stored on the client device 102A-N, 104 of the first participant (i.e., the participant that is presenting the content in the second region of the virtual meeting UI 108A-N). In one or more implementations, the content can be stored in a cloud storage platform, as discussed above. The content can be stored elsewhere.

At block 420, processing logic determines, using an AI model 232A-M and using at least a first portion of a transcript of the virtual meeting 122 as input to the AI model 232AM, that a second participant of the one or more participants is interested in accessing the content outside of the virtual meeting UI 108A-N.

In one implementation, the virtual meeting manager 132 may include an AI model 232A-M or other software configured to receive, as input, audio data associated with the participants of the virtual meeting (e.g., as discussed above, the audio data provided by the client devices 102A-N, 104 to the virtual meeting manager 132) and generate a text representation of the audio data. The AI model 232A-M that generates the text representation of the audio data can be a different AI model 232A-M than the AI model 232A-M discussed above in relation to block 420. The AI model 232A-M may include a speech-to-text model or other software that can convert audio data into text data. The output of the AI model 232A-M can form a transcript of the virtual meeting 122. The transcript of the virtual meeting 122 may further include one or more chat messages exchanged between participants of the virtual meeting 122 using the virtual meeting UI 108A-N. The transcript may include timestamps or other data indicating when a participant said a certain statement contained in the transcript or sent a chat message contained in the transcript. The transcript may include text indicating other actions during the virtual meeting 122 (e.g., a participant joining or leaving the virtual meeting 122, a user starting to present content or stopping presenting content, etc.).

In some implementations, the speech-to-text AI model 232A-M can generate the virtual meeting 122 transcript in real time (or near real time). For example, the virtual meeting manager 132 can obtain audio data from the one or more client devices 102A-N, 104 as participants speaking into the audiovisual components of their respective client devices 102AN, 104, the virtual meeting manager 132 can provide the audio data to the speech-to-text AI model 232A-M as input, the speech-to-text AI model 232A-M can generate a text output representing the input audio data, and the virtual meeting manager 132 can build the transcript using the outputs of the speech-to-text AI model 232A-M.

As discussed above, the AI model 232A-M of block 420 can use at least a first portion of the transcript of the virtual meeting 122 as input. The at least a first portion of the transcript may include a portion of the transcript spoken by a single participant. The portion may include one or more words of the transcript, a sentence, a sentence fragment, or some other portion. The portion can be divided between two or more instances of the participant speaking (e.g., if the participant was interrupted by another participant).

In one implementation, the AI model 232A-M includes a generative AI model. Using the AI model 232A-M and using the at least a first portion of the transcript as input to the AI model 232A-M may include using a generative AI prompt as input to the generative AI model. The generative AI prompt may be generated automatically (without any user request) and may include the at least a first portion of the transcript and a command for the generative AI model to determine whether the at least a first portion of the transcript indicates the second participant is interested in access the content outside of the virtual meeting 122. As an example, the at least a first portion of the transcript may include the text "Statement: Can you share the slide presentation with me?" and the command for the generative AI model may include the text "Question: Does the previous statement indicate that the participant is interested in accessing content outside of the virtual meeting?"

In some implementations, the generative AI model can be configured using context information. For example, the prompt subsystem discussed above can prepend a statement to the generative AI prompt that indicates to the generative AI model that the generative AI model is analyzing portions of a transcript of a virtual meeting 122 and is determining whether a portion of the transcript indicates that a participant of the virtual meeting 122 is interested in accessing content outside of the virtual meeting 122 or is interested in causing some type of predetermined action associated with the virtual meeting 122 to be performed.

At block 430, processing logic causes the content to be accessible to the second participant outside of the virtual meeting UI 108A-N. In some implementations, the contextual actions manager 138 obtains the output of the AI model 232A-M. The output can indicate that the second participant is interested in accessing the content outside of the virtual meeting AI 108A-N. The contextual action manager 138 can determine how to provide the second participant access to the content. Providing the second participant access to the content can be based on a storage location of the content.

In one implementation, where the content is stored on the client device 102A-N, 104 of the first user, causing the content to be accessible to the second participant outside of the virtual meeting UI 108A-N may include emailing a copy of a file that includes the content to the second participant. The contextual action manager 138 can cause an email application to generate an email that includes the file as an attachment. The email may include an email address of the second participant as the recipient email address. In one implementation, where the content is stored on the client device 102A-N, 104 of the first user, the contextual action manager 138 uploads the content to a portion of a cloud storage platform that is accessible by the second participant. The contextual action manager 138 can cause the cloud storage platform or another computing device to notify the second participant with instruction on how to access the content on the cloud storage platform (e.g., causing the cloud provider of the cloud storage platform to send an email to the second participant with instructions on how to access the content).

In some implementations, where the content is stored in a cloud storage platform, the contextual action manager 138 causes the cloud storage platform to provide the second participant with access to the content on the cloud platform. For example, the contextual action manager 138 can send a notification to the cloud storage platform with data indicating the identity of the first participant on the cloud storage platform, the identity of the second participant on the cloud storage platform, and the content. The notification may include data indicating to the cloud storage platform to provide the second participant access to the content on the cloud storage platform.

In one or more implementations, where the content includes a collaborative document stored on a cloud storage platform, causing the content to be accessible to the second participant outside of the virtual meeting UI 108A-N includes determining that the second participant does not have access rights to the collaborative document. For example, the contextual action manager 138 can use an API of the cloud storage platform to obtain a list of users that have access rights to the collaborative document and determine that the second participant is not included in the list of users. Causing the content to be accessible may include automatically sharing the collaborative document with the second participant. Automatically sharing the collaborative document with the second participant may include the contextual action manager 138 sending a notification to the cloud storage platform with data indicating to the cloud storage platform to provide the second participant access to the content on the cloud storage platform.

In some implementations, block 430 includes causing the content to be accessible to additional participants of the virtual meeting 122 outside of the virtual meeting 122. The AI model 232A-M can determine which participants should obtain access to the content based on the at least a first portion of the transcript or based on some other portion of the transcript of the virtual meeting 122. Causing the content to be accessible may include causing the content to be accessible to users that are not participants of the virtual meeting 122.

In one implementation, causing the content to be accessible to the second participant may include causing the virtual meeting UI 108A-N to present, to the first participant, a link to an online resource that causes the content to be accessible to the second participant. The online resource may include a cloud storage platform that stored the content. The link to the online resource may include a link to a portion of the online resource where the first participant can confirm that the content is to be made accessible to the second participant. For example, the link to the online resource may include a link to a webpage of a cloud storage platform that stored the content, and the webpage may indicate the identity of the content, the identity of the second user, and a UI element (e.g., a button) asking the first participant to confirm that the first participant wants to make the content accessible to the second participant.

In some implementations, causing the content to be accessible to the second participant includes requesting permission of the first participant to make the content accessible to the second participant and obtaining the permission of the first participant. Responsive to the contextual action manager 138 determining that the second participant is interested in accessing the content outside of the virtual meeting UI 108, the contextual action manager 138 can cause the virtual meeting UI 108A-N displayed on the first participant's client device 102A-N, 104 to present a UI element requesting permission of the first participant to make the content accessible to the second participant. The first participant can interact with the UI element to confirm that the first participant is granting the permission. Responsive to obtaining the confirmation, the contextual action manager 138 can cause the content to be accessible to the second participant, as discussed herein.

In one implementation, the method 400 further includes determining, using the AI model 232A-M and using at least a second portion of the transcript, that a third participant of the virtual meeting 122 is interested in causing the performance of a predetermined action. The predetermined action may include scheduling a follow-up virtual meeting. The method 400 may further include causing a calendar application to generate a calendar invite. The calendar application may include an application executing on a client device 102A-N, 104 or on another computing device (e.g., the server 130 or another server not shown in **FIG. 1****).** The calendar invite may include an invitation to the follow-up virtual meeting.

As an example, a third participant can say, during the virtual meeting 122, "We are getting close to the end of our meeting. Could we meet tomorrow afternoon to continue our discussion?" The AI model 232A-M can use the portion of the transcript that contains the third participant's statement as input and determine that the third participant is interested in scheduling a follow-up meeting. The AI model 232A-M can generate an output indicating that a user is interested in scheduling a follow-up meeting and indicating the proposed date and time for the follow-up meeting. The contextual action manager 138 can obtain the AI model's 232A-M output and can provide a request to a calendar application with data that the calendar application can use to generate the calendar invite (e.g., the identities of the participants of the current virtual meeting 122, a date and time for the follow-up meeting, etc.). The calendar application can obtain the request, generate the calendar invite, and send the calendar invite to the participants of the virtual meeting 122 (e.g., by sending an email with the calendar invite).

In some implementations, the predetermined action may include setting a reminder. The method 400 may further include causing a calendar application to generate the reminder. The reminder may include a date and time at which the reminder is provided, the content of the reminder (e.g., a text description), or other reminder data. The reminder may include a push notification, a pop-up notification, or some other type of notification that a client device 102AN, 104 can provide to a user of the device.

As an example, a third participant can say, during the virtual meeting 122, "Remind me to send the email next week." The AI model 232A-M can use the portion of the transcript that contains the third participant's statement as input and determine that the third participant is interested in setting a reminder. The AI model 232A-M can generate an output indicating that a user is interested in a reminder and indicating the proposed date, time, and content for the reminder. The contextual action manager 138 can obtain the AI model's 232A-M output and can provide a request to a calendar application with data that the calendar application can use to generate reminder. The calendar application can obtain the request and generate the reminder.

In some implementations, the predetermined action includes sending an email. The method 400 may further include causing an email application to generate the email. The email may include a sending user, one or more recipient users (including carbon copy ("CC") and blind carbon copy ("BCC") recipient users), a subject, a body, or one or more attachments. In some implementations, the portion of the transcript indicating interest in sending the email can identify an invitee of the virtual meeting 122 that is absent from the virtual meeting 122.

As an example, a third participant can say, during the virtual meeting 122, "Could you send an email to Jane reminding her of the meeting?" and Jane may include an invitee to the virtual meeting 122 that is currently not participating in the virtual meeting 122. The AI model 232A-M can use the portion of the transcript that contains the third participant's statement as input and determine that the third participant is interested in sending an email to Jane reminding Jane about the virtual meeting 122. The AI model 232A-M can generate an output indicating that a user is interested in an email and indicating content for the email (sender, recipients, subject, body, etc.). The contextual action manager 138 can obtain the AI model's 232A-M output and can provide a request to an email application with data that the email application can use to generate the email. The email application can obtain the request and generate the email. The email application can send the email to the one or more recipients of the email.

In one implementation, the predetermined action may include generating one or more action items discussed during the virtual meeting 122. The method 400 may further include generating, using an AI model 232A-M and using at least a third portion of the transcript as input to the AI model 232A-M, the one or more action items. The method 400 may further include causing an email application to generate an email that includes the one or more action items. The third portion of the transcript may include the portion of the transcript corresponding to the beginning of the transcript to the current time or may include some other portion of the transcript.

As an example, a third participant can say, during the virtual meeting 122, "What are the action items from our meeting today?" The AI model 232A-M can use the portion of the transcript that contains the third participant's statement as input and determine that the third participant is interested in generating actions items associated with the virtual meeting 122. The AI model 232A-M can generate an output indicating that a user is interested in generating action items associated with the virtual meeting 122. The contextual action manager 138 can obtain the AI model's 232A-M output and can generate a generative AI prompt that includes a portion of the virtual meeting 122 transcript and a command to list the action items from the transcript. The contextual action manager 138 can provide the generative AI prompt to an AI model 232A-M, and the AI model 232A-M can generate the one or more action items. The AI model 232A-M can provide the one or more action items to the contextual action manager 138. The contextual action manager 138 can provide a request to an email application with data (including the one or more action items) that the email application can use to generate the email. The email application can obtain the request and generate the email. The email application can send the email to the one or more recipients of the email. The one or more recipients may include the one or more participants of the virtual meeting 122.

In some implementations, the AI model 232A-M can determine a participant on whose behalf the predetermined action is performed. The AI model 232A-M can determine the participant based on the at least a second portion of the transcript of the virtual meeting 122. In some implementations, where the at least a second portion of the transcript identifies a participant to perform the predetermined action, the AI model 232A-M determines the identified participant as the participant on whose behalf the predetermined action is performed. Where the at least a second portion of the transcript does not identify a participant to perform the predetermined action, the AI model 232A-M can determine that the participant expressing interest in having the predetermined action performed as the participant on whose behalf the predetermined action is performed. In some implementations, the contextual action manager 138 can override or ignore the determined participant and select a different participant for performing the predetermined action, for example, because the originally determined participant does not have the ability or permissions to perform the predetermined action.

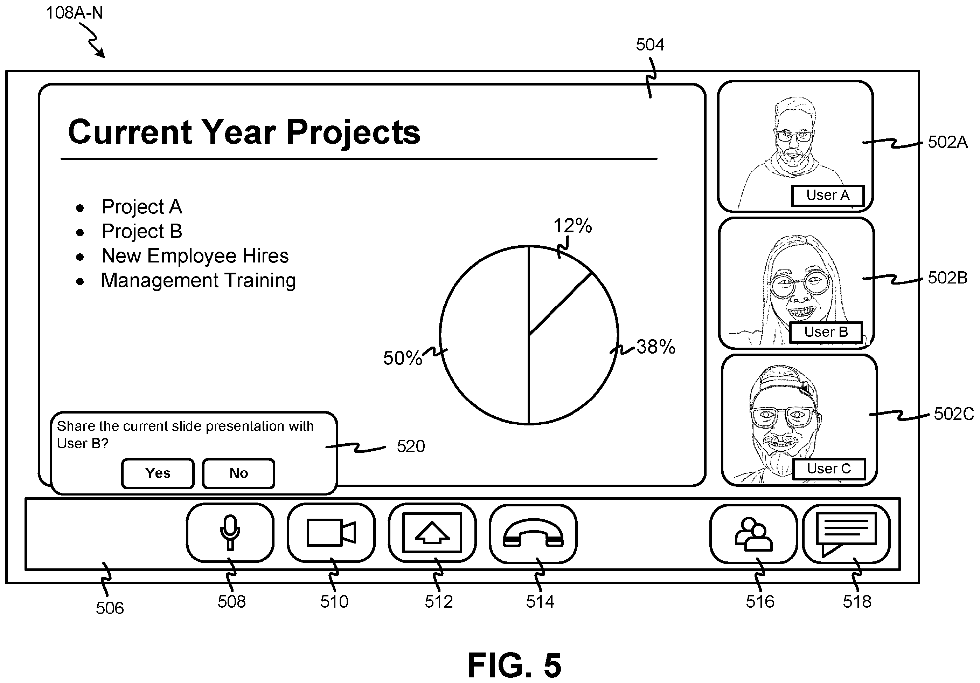

**FIG. 5** illustrates an example UI 108A-N of a virtual meeting 122, in accordance with some implementations of the present disclosure. The virtual meeting UI 108A-N may include one or more first regions 502A-C corresponding to a visual item of the virtual meeting 122, such as a video stream provided by a client device 102A-N, 104 of a participant of the virtual meeting 122. The virtual meeting UI 108A-N may include a second region 504 corresponding to a presentation of content by a first participant. As discussed above, the content presented in the second region 504 may include a slide presentation, a video, a collaborative document, etc.

The virtual meeting UI 108A-N can include a toolbar 506 that includes one or more UI elements configured to perform virtual meeting operations. For example, as seen in **FIG. 5****,** the toolbar 506 includes an audio control button 508 used to mute and unmute a participant's audio stream, a camera control button 510 used to mute and unmute a participant's video stream, and a screen share button 512 used to share a participant's client device's 102A-N, 104 screen with other participants of the virtual meeting 122 and present the content of the second region 504. The toolbar 506 may include an exit button 514 used to disconnect from the virtual meeting 122. In some implementations, the toolbar 506 includes a participant button 516 that causes a third region to be displayed, and the third region can list one or more participants of the virtual meeting 122. The list of the one or more participants may include the participants currently in the virtual meeting 122, all invitees of the virtual meeting 122 (even if some of the invitees are not currently in the virtual meeting 122), or some other list of participants of the virtual meeting 122. The toolbar 506 may include a chat button 518 that causes a fourth region to be displayed, and the fourth region may include a chat interface where participants of the virtual meeting 122 can send messages to each other, and the messages are displayed in the fourth region.

In some implementations, as discussed above, causing the content presented in the second region 504 to be accessible to a second participant includes requesting permission of the first participant to make the content accessible and obtaining the permission from the first participant. Thus, the virtual meeting UI 108A-N can present a content access confirmation UI element 520 to the first participant. The content access confirmation UI element 520 may include a UI element that prompts the first participant to confirm that the content presented in the second region 504 should be accessible to the second participant outside of the virtual meeting UI 108A-N. The virtual meeting UI 108A-N can present the content access confirmation UI element 520 responsive to the contextual action manager 138 determining that the second participant is interested in accessing the content outside of the virtual meeting 122. Responsive to the first participant using the content access confirmation UI element 520 to grant permission to the second participant to access the content, the contextual action manager 138 can cause the content to be accessible to the second participant outside of the virtual meeting 122. Responsive to the first participant using the content access confirmation UI element 520 to deny permission to the second participant, the contextual action manager 138 may not cause the content to be accessible to the second participant outside of the virtual meeting 122.

In some implementations, as shown in the example depicted **FIG. 5****,** the content access confirmation UI element 520 may include a message identifying the content and the second participant. The content access confirmation UI element 520 may include other data that can assist the first participant in determining whether to make the content accessible to the second participant. The content access confirmation UI element 520 may include one or more UI elements that allow the first participant to grant or deny the permission for the second participant to access the content. For example, as shown in **FIG. 5****,** the content access confirmation UI element 520 may include a "Yes" button or a "No" button. As discussed above, the content access confirmation UI element 520 may include a link to an online resource, and responsive to the first participant interacting with the link, the client device 102A-N, 104 of the first participant can present a portion of the online resource where the first participant can confirm that the content is to be made accessible to the second participant.

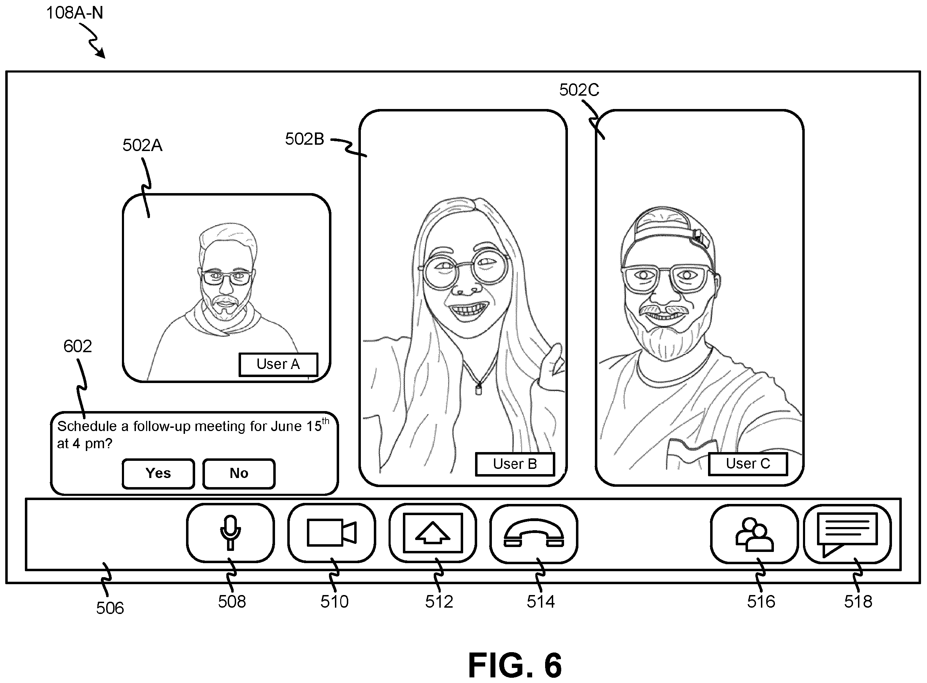

**FIG. 6** illustrates another example UI 108A-N of a virtual meeting 122, in accordance with some implementations of the present disclosure. The virtual meeting UI 108AN may include one or more of the components of the virtual meeting UI 108A-N of **FIG. 5****,** such as the one or more first regions 502A-C, the second region 504, or the toolbar 506 and its respective UI elements 508-518. In some implementations, the virtual meeting UI 108A-N includes a predetermined action confirmation UI element 602. Similar to the content access confirmation UI element 520 of **FIG. 5****,** the predetermined action confirmation UI element 602 can allow a participant of the virtual meeting 122 to confirm that the participant is interested in having a predetermined action performed. For example, as depicted in **FIG. 6****,** the predetermined action confirmation UI element 602 may include a message requesting that the participant viewing the predetermined action confirmation UI element 602 confirm that the participant is interested in scheduling a follow-up meeting.

The predetermined action confirmation UI element 602 may include one or more UI elements that allow the participant to confirm or reject that the participant is interested in having the predetermined action performed. For example, as shown in **FIG. 6****,** the predetermined action confirmation UI element 602 may include a "Yes" button or a "No" button. As discussed above, the predetermined action confirmation UI element 602 may include a link to an online resource, and responsive to the participant interacting with the link, the client device 102A-N, 104 of the participant can present a portion of the online resource where the participant can confirm that the predetermined action is to be performed.

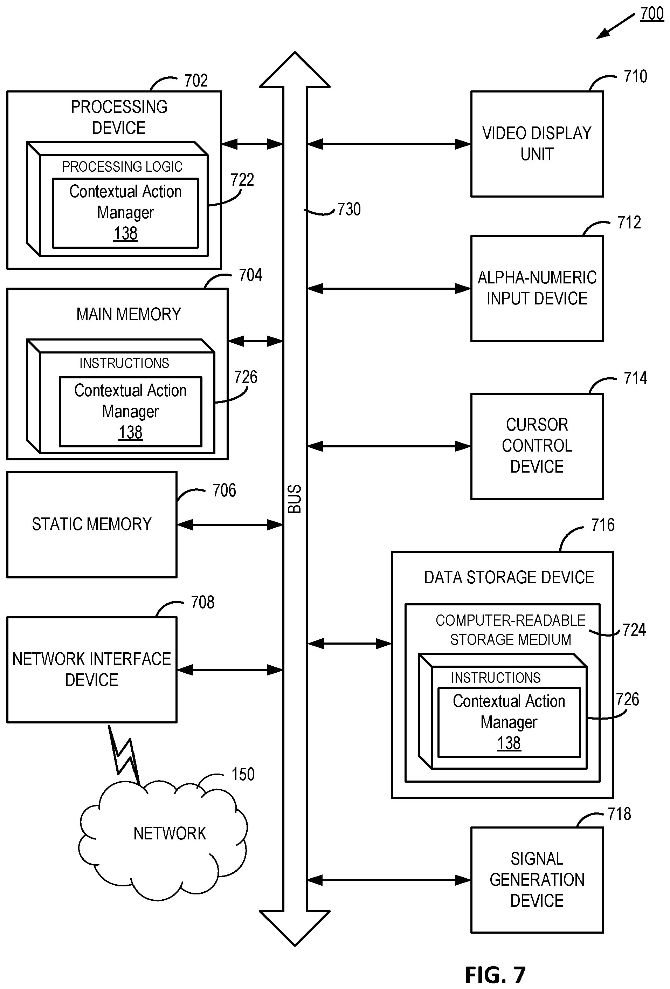

**FIG. 7** is a block diagram illustrating an example computer system, in accordance with implementations of the present disclosure. The computer system 700 can include a client device 102A-N, 104, the virtual meeting platform 120, or the server 130 in **FIG. 1****.** The machine can operate in the capacity of a server or an endpoint machine, in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 700 includes a processing device (processor) 702, a main memory 704 (e.g., read-only memory (ROM), flash memory, dynamic random access memory (DRAM) such as synchronous DRAM (SDRAM), double data rate (DDR SDRAM), or DRAM (RDRAM), etc.), a static memory 706 (e.g., flash memory, static random access memory (SRAM), etc.), and a data storage device 716, which communicate with each other via a bus 730.

The processing device 702 represents one or more general-purpose processing devices such as a microprocessor, central processing unit, or the like. More particularly, the processing device 702 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 702 can also be one or more special-purpose processing devices such as an application specific integrated circuit (ASIC), a field programmable gate array (FPGA), a digital signal processor (DSP), network processor, or the like. The processing device 702 is configured to execute the processing logic 722 for performing the operations discussed herein (e.g., the operations of the contextual action manager 138).

The computer system 700 can further include a network interface device 708. The computer system 700 also can include a video display unit 710 (e.g., a liquid crystal display (LCD) or a cathode ray tube (CRT)), an input device 712 (e.g., a keyboard, and alphanumeric keyboard, a motion sensing input device, touch screen), a cursor control device 714 (e.g., a mouse), and a signal generation device 718 (e.g., a speaker).

The data storage device 716 can include a non-transitory machine-readable storage medium 724 (sometimes referred to as a "computer-readable storage medium") on which is stored one or more sets of instructions 726 (e.g., the instructions to carry out one or more operations of the contextual action manager 138) embodying any one or more of the methodologies or functions described herein. The instructions can also reside, completely or at least partially, within the main memory 704 and/or within the processing device 702 during execution thereof by the computer system 700, the main memory 704 and the processing device 702 also constituting machine-readable storage media. The instructions can further be transmitted or received over the network 150 via the network interface device 708.

In one implementation, the instructions 726 include instructions for determining visual items for presentation in a user interface of a virtual meeting. While the computer-readable storage medium 724 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interact between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collect data is anonymized prior to performing any analysis to obtain any statistical patterns so that the identity of the user cannot be determined from the collected data.

The specification includes the following subject-matter expressed in the form of clauses 1-22.
1. A method, comprising:
   causing a virtual meeting user interface (UI) to be presented during a virtual meeting between a plurality of participants, the virtual meeting UI comprising:
      a plurality of first regions each corresponding to a participant of the plurality of participants, and
      a second region corresponding to a presentation of content by a first participant of the plurality of participants;
   determining, using an artificial intelligence (AI) model and using at least a first portion of a transcript of the virtual meeting as input to the AI model, that a second participant of the plurality of participants is interested in accessing the content outside of the virtual meeting UI; and
   causing the content to be accessible to the second participant outside of the virtual meeting UI.
2. The method of clause 1, wherein:
   the AI model comprises a generative AI model;
   using the AI model and using the at least a first portion of the transcript as input to the AI model comprises using a generative AI prompt as input to the generative AI model; and
   the generative AI prompt comprises:
      the at least a first portion of the transcript, and
      a command for the generative AI model to determine whether the at least a first portion of the transcript indicates the second participant is interested in access the content outside of the virtual meeting.
3. The method of clause 1 or clause 2, wherein the content comprises at least one of:
   a slide presentation;
   an image;
   a video; or
   a text-based document.
4. The method of any of clauses 1-3, further comprising:
   determining, using the AI model and using at least a second portion of the transcript, that a third participant of the plurality of participants is interested in scheduling a follow-up virtual meeting; and
   causing a calendar application to generate a calendar invite.
5. The method of any of clauses 1-3, wherein:
   determining, using the AI model and using at least a second portion of the transcript, that a third participant of the plurality of participants is interested in setting a reminder; and
   causing a calendar application to generate the reminder.
6. The method of any of clauses 1-5, wherein:
   the content comprises a collaborative document stored on a cloud storage platform; and
   causing the content to be accessible to the second participant outside of the virtual meeting UI further comprises:
      determining that the second participant does not have access rights to the collaborative document, and
   automatically sharing the collaborative document with the second participant.
7. The method of clause 6, wherein automatically sharing the collaborative document with the second participant further comprises:
   requesting permission of the first participant to share the collaborative document with the second participant; and
   obtaining the permission of the first participant.
8. The method of any of clauses 1-7, wherein causing the content to be accessible to the second participant outside of the virtual meeting UI further comprises emailing a copy of a file comprising the content to the second participant.
9. A system, comprising:
   a memory; and
   a processing device, coupled to the memory, configured to perform operations comprising:
      causing a virtual meeting user interface (UI) to be presented during a virtual meeting between a plurality of participants, the virtual meeting UI comprising:
         a plurality of first regions each corresponding to a participant of the plurality of participants, and
         a second region corresponding to a presentation of content by a first participant of the plurality of participants,
      determining, using an artificial intelligence (AI) model and using at least a first portion of a transcript of the virtual meeting as input to the AI model, that a second participant of the plurality of participants is interested in accessing the content outside of the virtual meeting UI, and
      causing the content to be accessible to the second participant outside of the virtual meeting UI.
10. The system of clause 9, wherein the operations further comprise:
   determining, using the AI model and using at least a second portion of the transcript as input to the AI model, that a third participant of the plurality of participants is interested in sending an email; and
   causing an email application to generate the email.
11. The system of clause 10, wherein:
   the at least a second portion of the transcript identifies an invitee of the virtual meeting that is absent from the virtual meeting; and
   the email includes a recipient email address associated with the absent invitee.
12. The system of clause 9, wherein the operations further comprise:
   determining, using the AI model and using at least a second portion of the transcript as input to the AI model, that a third participant of the plurality of participants is interested in generating one or more action items discussed during the virtual meeting;
   generating, using the AI model and using at least a third portion of the transcript as input to the AI model, the one or more actions items; and
   causing an email application to generate an email comprising the one or more action items.
13. The system of any of clauses 9-12, wherein:
   the AI model comprises a generative AI model;
   using the AI model and using the at least a first portion of the transcript as input to the AI model comprises using a generative AI prompt as input to the generative AI model; and
   the generative AI prompt comprises:
      the at least a first portion of the transcript, and
      a command for the generative AI model to determine whether the at least a first portion of the transcript indicates the second participant is interested in access the content outside of the virtual meeting.
14. The system of any of clauses 9-13, wherein the content comprises at least one of:
   a slide presentation;
   an image;
   a video; or
   a text-based document.
15. The system of any of clauses 9-14, wherein the operations further comprise:
   determining, using the AI model and using at least a second portion of the transcript, that a third participant of the plurality of participants is interested in scheduling a follow-up virtual meeting; and
   causing a calendar application to generate a calendar invite.
16. A non-transitory computer-readable storage medium comprising instructions that cause a processing device to perform operations comprising:
   causing a virtual meeting user interface (UI) to be presented during a virtual meeting between a plurality of participants, the virtual meeting UI comprising:
      a plurality of first regions each corresponding to a participant of the plurality of participants, and
      a second region corresponding to a presentation of content by a first participant of the plurality of participants;
   determining, using an artificial intelligence (AI) model and using at least a first portion of a transcript of the virtual meeting as input to the AI model, that a second participant of the plurality of participants is interested in accessing the content outside of the virtual meeting UI; and
   causing the content to be accessible to the second participant outside of the virtual meeting UI.
17. The computer-readable storage medium of clause 16, wherein causing the content to be accessible to the second participant comprises causing the virtual meeting UI to present, to the first participant, a link to an online resource that causes the content to be accessible to the second participant.
18. The computer-readable storage medium of clause 16 or clause 17, wherein causing the content to be accessible to the second participant comprises:
   requesting permission of the first participant to make the content accessible to the second participant; and
   obtaining the permission of the first participant.
19. The computer-readable storage medium of any of clauses 16-18, wherein:
   the AI model comprises a generative AI model;
   using the AI model and using the at least a first portion of the transcript as input to the AI model comprises using a generative AI prompt as input to the generative AI model; and
   the generative AI prompt comprises:
      the at least a first portion of the transcript, and
      a command for the generative AI model to determine whether the at least a first portion of the transcript indicates the second participant is interested in access the content outside of the virtual meeting.
20. The computer-readable storage medium of any of clauses 16-19, wherein the content comprises at least one of:
   a slide presentation;
   an image;
   a video; or
   a text-based document.
21. A computer program product comprising instructions which, when executed by one or more processors, cause the processors to perform the method of any of clauses 1-8.
22. Computer-executable instructions which, when executed by one or more processors, cause the processors to perform the method of any of clauses 1-8.

## Claims

1. A method, comprising:
causing a virtual meeting user interface (UI) to be presented during a virtual meeting between a plurality of participants, the virtual meeting UI comprising:
a plurality of first regions each corresponding to a participant of the plurality of participants, and
a second region corresponding to a presentation of content by a first participant of the plurality of participants;
determining, using an artificial intelligence (AI) model and using at least a first portion of a transcript of the virtual meeting as input to the AI model, that a second participant of the plurality of participants is interested in accessing the content outside of the virtual meeting UI; and
causing the content to be accessible to the second participant outside of the virtual meeting UI.

2. The method of claim 1, wherein:
the AI model comprises a generative AI model;
using the AI model and using the at least a first portion of the transcript as input to the AI model comprises using a generative AI prompt as input to the generative AI model; and
the generative AI prompt comprises:
the at least a first portion of the transcript, and
a command for the generative AI model to determine whether the at least a first portion of the transcript indicates the second participant is interested in access the content outside of the virtual meeting; and/or
wherein the content comprises at least one of:
a slide presentation;
an image;
a video; or
a text-based document.

3. The method of claim 1 or claim 2, further comprising:
determining, using the AI model and using at least a second portion of the transcript, that a third participant of the plurality of participants is interested in scheduling a follow-up virtual meeting; and
causing a calendar application to generate a calendar invite;
or wherein:
determining, using the AI model and using at least a second portion of the transcript, that a third participant of the plurality of participants is interested in setting a reminder; and
causing a calendar application to generate the reminder.

4. The method of any of claims 1-3, wherein:
the content comprises a collaborative document stored on a cloud storage platform; and
causing the content to be accessible to the second participant outside of the virtual meeting UI further comprises:
determining that the second participant does not have access rights to the collaborative document, and
automatically sharing the collaborative document with the second participant.

5. The method of claim 4, wherein automatically sharing the collaborative document with the second participant further comprises:
requesting permission of the first participant to share the collaborative document with the second participant; and
obtaining the permission of the first participant.

6. The method of any of claims 1-5, wherein causing the content to be accessible to the second participant outside of the virtual meeting UI further comprises emailing a copy of a file comprising the content to the second participant.

7. A system, comprising:
a memory; and
a processing device, coupled to the memory, configured to perform operations comprising:
causing a virtual meeting user interface (UI) to be presented during a virtual meeting between a plurality of participants, the virtual meeting UI comprising:
a plurality of first regions each corresponding to a participant of the plurality of participants, and
a second region corresponding to a presentation of content by a first participant of the plurality of participants,
determining, using an artificial intelligence (AI) model and using at least a first portion of a transcript of the virtual meeting as input to the AI model, that a second participant of the plurality of participants is interested in accessing the content outside of the virtual meeting UI, and
causing the content to be accessible to the second participant outside of the virtual meeting UI.

8. The system of claim 7, wherein the operations further comprise:
determining, using the AI model and using at least a second portion of the transcript as input to the AI model, that a third participant of the plurality of participants is interested in sending an email; and
causing an email application to generate the email.

9. The system of claim 8, wherein:
the at least a second portion of the transcript identifies an invitee of the virtual meeting that is absent from the virtual meeting; and
the email includes a recipient email address associated with the absent invitee.

10. The system of claim 7, wherein the operations further comprise:
determining, using the AI model and using at least a second portion of the transcript as input to the AI model, that a third participant of the plurality of participants is interested in generating one or more action items discussed during the virtual meeting;
generating, using the AI model and using at least a third portion of the transcript as input to the AI model, the one or more actions items; and
causing an email application to generate an email comprising the one or more action items.

11. The system of any of claims 7-10, wherein:
the AI model comprises a generative AI model;
using the AI model and using the at least a first portion of the transcript as input to the AI model comprises using a generative AI prompt as input to the generative AI model; and
the generative AI prompt comprises:
the at least a first portion of the transcript, and
a command for the generative AI model to determine whether the at least a first portion of the transcript indicates the second participant is interested in access the content outside of the virtual meeting; and/or
wherein the content comprises at least one of:
a slide presentation;
an image;
a video; or
a text-based document.

12. The system of any of claims 7-11, wherein the operations further comprise:
determining, using the AI model and using at least a second portion of the transcript, that a third participant of the plurality of participants is interested in scheduling a follow-up virtual meeting; and
causing a calendar application to generate a calendar invite.

13. A non-transitory computer-readable storage medium comprising instructions that cause a processing device to perform operations comprising:
causing a virtual meeting user interface (UI) to be presented during a virtual meeting between a plurality of participants, the virtual meeting UI comprising:
a plurality of first regions each corresponding to a participant of the plurality of participants, and
a second region corresponding to a presentation of content by a first participant of the plurality of participants;
determining, using an artificial intelligence (AI) model and using at least a first portion of a transcript of the virtual meeting as input to the AI model, that a second participant of the plurality of participants is interested in accessing the content outside of the virtual meeting UI; and
causing the content to be accessible to the second participant outside of the virtual meeting UI.

14. The computer-readable storage medium of claim 13, wherein causing the content to be accessible to the second participant comprises causing the virtual meeting UI to present, to the first participant, a link to an online resource that causes the content to be accessible to the second participant; and/or
wherein causing the content to be accessible to the second participant comprises:
requesting permission of the first participant to make the content accessible to the second participant; and
obtaining the permission of the first participant.

15. The computer-readable storage medium of claim 13 or claim 14, wherein:
the AI model comprises a generative AI model;
using the AI model and using the at least a first portion of the transcript as input to the AI model comprises using a generative AI prompt as input to the generative AI model; and
the generative AI prompt comprises:
the at least a first portion of the transcript, and
a command for the generative AI model to determine whether the at least a first portion of the transcript indicates the second participant is interested in access the content outside of the virtual meeting; and/or
wherein the content comprises at least one of:
a slide presentation;
an image;
a video; or
a text-based document.
